# EUROPEAN PATENT APPLICATION

(11) **EP 1 022 107 A1**
(43) Date of publication of application: **26.07.2000**
(21) Application number: 00100125.4
(22) Date of filing: 05.01.2000
(51) Int. Cl.: B29C 45/17, B65D 69/00, A47G 21/06

(54) **Method and apparatus for manufacturing plastic articles**

(30) Priority: 19.01.1999 DE 19901648; 16.02.1999 DE 19906369
(71) Applicant: HEKUMA Herbst Maschinenbau GmbH, 85386 Eching (DE)
(72) Inventor: Herbst, Richard, 85386 Eching (DE)
(74) Representative: Witte, Alexander, Dr.-Ing.

(57) **Zusammenfassung**

Die Erfindung betrifft ein Verfahren zum Herstellen von Kunststoffteilen (12, 74, 76) mit den Schritten: Formen der Kunststoffteile (12, 74, 76) in einem Formhohlraum eines Formwerkzeugs, Entformen der Kunststoffteile (12, 74, 76) aus dem Formhohlraum mit Hilfe eines Greifwerkzeugs und Zusammenstellen der Kunststoffteile (12, 74, 76) zu von selbst zusammenhaltenden und handhabbaren Transport- bzw. Verpackungseinheiten (10, 70, 72). Die an sich nicht stapelbaren Kunststoffteile (12, 74, 76) werden durch einen Spritzgießvorgang geformt, es werden beim Spritzgießen zusätzliche, für die Kunststoffteile (12, 74, 76) nicht bestimmungsgemäß notwendige Verbindungsmittel (80, 84) an den Kunststoffteilen (12, 74, 76) vorgesehen, und die Kunststoffteile (12, 74, 76) werden mit Hilfe der zusätzlichen Verbindungsmittel (80, 84) zu den Transport- bzw. Verpackungseinheiten (10, 70, 72) zusammengefügt. Darüber hinaus wird auch eine dem Verfahren entsprechende Vorrichtung beschrieben.

## Description

Die vorliegende Erfindung betrifft ein Verfahren zum Herstellen von Kunststoffteilen mit den Schritten:
- Formen der Kunststoffteile in einem Formhohlraum eines Formwerkzeugs,
- Entformen der Kunststoffteile aus dem Formhohlraum mit Hilfe eines Greifwerkzeugs und
- Zusammenstellen der Kunststoffteile zu von selbst zusammenhaltenden und handhabbaren Transport- bzw. Verpackungseinheiten.

Die Erfindung betrifft des weiteren eine Vorrichtung zum Herstellen von Kunststoffteilen, mit einem Formwerkzeug mit zumindest einem Formhohlraum zum Formen von Kunststoffteilen, mit einem Greifwerkzeug zum Entformen der Kunststoffteile aus dem Formhohlraum und mit Mitteln zum Zusammenstellen der Kunststoffteile zu Transport- bzw. Verpackungseinheiten.

Schließlich betrifft die Erfindung auch ein durch Spritzgießen hergestelltes, an sich nicht stapelbares Kunststoffteil.

Ein Verfahren und eine Vorrichtung dieser Art sowie dementsprechend hergestellte Kunststoffteile sind aus der DE-PS 34 39 660 bekannt.

In dieser Druckschrift ist eine Entnahmevorrichtung für warmgeformte, hohle und einen Rand aufweisende, d.h. von Hause aus stapelbare Gegenstände aus Kunststoff beschrieben. Anschaulich gesprochen sind dies vor allem Kunststoffbecher oder andere zumindest becherförmige Kunststoffteile. Diese sind aufgrund ihrer Form direkt ineinander stapelbar. Die Herstellung solcher Becher bzw. allgemeiner solcher hohl geformter Kunststoffteile geschieht üblicherweise durch Tiefziehen. Dabei wird eine als ebene Bahn zugeführte Folie mit Hilfe von zwei gegeneinander arbeitenden Werkzeughälften, von denen eine einen Formhohlraum aufweist und die andere einen komplementären Stempel besitzt, in die gewünschte Form gezogen.

Mit der Entnahmevorrichtung gemäß der DE-PS 34 39 660 können die hergestellten Kunststoffteile dann aus dem Formhohlraum entnommen, d.h. entformt werden. Anschließend werden die entnommenen Teile mit Hilfe eines Greifwerkzeugs zwischen Führungsschienen oder -stangen zu Stapeln ineinandergesteckt. Die hierdurch zusammengestellten Transport- bzw. Verpackungseinheiten sind bei der Weiterverarbeitung oder Verpackung vergleichsweise einfach und unkompliziert zu handhaben.

Das bekannte Verfahren besitzt jedoch den Nachteil, daß es nicht zur Herstellung beliebig geformter Kunststoffteile anwendbar ist. So können zum einen Kunststoffteile, die eine komplexere Form aufweisen, nicht durch Tiefziehen hergestellt werden. Zum anderen fehlt vielen nicht-becherförmigen Kunststoffteilen die Eigenschaft, zu stabilen Stapeln ineinander gesteckt werden zu können.

Ein Beispiel hierfür ist die Herstellung von Einwegbestecken, d.h. Messern, Gabeln und Löffeln aus Kunststoff. Ein anderes Beispiel sind Kabelbinder oder Verschlußelemente für mit Getränken gefüllte Kartonverpackungen, allgemein gesprochen Teile, die in einer automatisierten Anlage weiterverarbeitet werden können. Derartige Teile werden üblicherweise im Spritzgießverfahren hergestellt, und sie sind aufgrund ihrer funktionsbedingten Form nicht in stabilen, selbst zusammenhaltenden Stapeln zusammensteckbar.

Die Herstellung solcher Kunststoffteile geschieht heutzutage üblicherweise so, daß die Teile nach dem Spritzgießvorgang einfach aus dem Formhohlraum des Formwerkzeugs ausgeworfen werden und dann als lose Teile in einen Auffangbehälter fallen. Letzteres ist im einfachsten Fall ein einfacher Transportcontainer oder Transportsack. Dieses üblicherweise angewendete Vorgehen zum Herstellen derartiger Kunststoffteile besitzt jedoch den Nachteil, daß die als loses Schüttgut zusammengestellten Transport- bzw. Verpackungseinheiten relativ sperrig und unhandlich sind. Des weiteren besteht vor allem bei länglich geformten Teilen wie den genannten Einwegbestecken die Gefahr, daß die ungeordnet zusammenliegenden Teile bei der Weiterbehandlung oder beim Transport brechen oder anderweitig beschädigt werden. Auch ist die Weiterbehandlung als loses Schüttgut bei Einwegbestecken nicht besonders hygienisch.

Ein weiterer Nachteil bei der Herstellung von Kunststoffteilen wie Einwegbestecken oder Kabelbindern ist, daß derartige Teile üblicherweise in Verpackungseinheiten von 50, 100 oder sogar 1.000 Stück angeboten werden. Die hergestellten Kunststoffteile müssen dementsprechend zu Transport- bzw. Verpackungseinheiten mit diesen "runden" Stückzahlen zusammengestellt werden. Spritzgießmaschinen zur Herstellung derartiger Mengen von Kunststoffteilen besitzen üblicherweise nicht nur einen Formhohlraum, sondern gleich mehrere nebeneinander angeordnete Formhohlräume, die in einem gemeinsamen Spritzgießvorgang gleichzeitig befüllt werden. Aus konstruktiven Gründen, vor allem zur Erreichung einer gleichmäßigen Verteilung der Kunststoffschmelze haben sich hier vielfache von vier, insbesondere Anzahlen von 12, 16, 24 oder 48 Formhohlräumen pro Werkzeug eingebürgert. Wie leicht nachzuvollziehen ist, ergeben sich hieraus Schwierigkeiten, wenn die mit einer derartigen Spritzgießmaschine hergestellten Kunststoffteile anschließend in Transport- bzw. Verpackungseinheiten von 50, 100 oder 1.000 Stück zusammengestellt werden sollen, da diese Stückzahlen nicht ohne Rest durch die Anzahl der Formhohlräume teilbar sind. Das Zusammenstellen der Kunststoffteile zu den Transport- bzw. Verpackungseinheiten ist somit stets mit einem zusätzlichen Aufwand verbunden.

Es ist daher Aufgabe der vorliegenden Erfindung, ein Verfahren der eingangs genannten Art anzugeben, mit dem Kunststoffteile beliebiger Form unabhängig von ihrer Form zu Transport- bzw. Verpackungseinheiten zusammenstellbar sind, deren weitere Handhabung einfach und unkompliziert ist. Es ist darüber hinaus Aufgabe der vorliegenden Erfindung, eine dementsprechende Vorrichtung anzugeben.

Diese Aufgabe wird hinsichtlich des eingangs genannten Verfahrens dadurch gelöst,
- daß die Kunststoffteile vorzugsweise an sich nicht stapelbar sind;
- daß die Kunststoffteile durch einen Spritzgießvorgang geformt werden,
- daß beim Spritzgießen zusätzliche für die Kunststoffteile nicht bestimmungsgemäß notwendige Verbindungsmittel an den Kunststoffteilen vorgesehen werden, und
- daß die Kunststoffteile mit Hilfe der zusätzlichen Verbindungsmittel zu den Transport- bzw. Verpackungseinheiten zusammengefügt werden.

Die Aufgabe wird hinsichtlich der eingangs genannten Vorrichtung dadurch gelöst, daß das Formwerkzeug ein Spritzgießwerkzeug für an sich nicht stapelbare Teile ist, daß der Formhohlraum Elemente zum Ausbilden von zusätzlichen, für die Kunststoffteile nicht bestimmungsgemäß notwendigen Verbindungsmitteln an den Kunststoffteilen aufweist und daß Mittel vorgesehen sind, um die Kunststoffteile mit Hilfe der zusätzlichen Verbindungsmittel zu den Transport- bzw. Verpackungseinheiten zusammenzufügen.

Ein dementsprechend hergestelltes Kunststoffteil ist dadurch gekennzeichnet, daß es zusätzliche, für das Kunststoffteil nicht bestimmungsgemäß notwendige Verbindungsmittel aufweist, wobei die zusätzlichen Verbindungsmittel derart ausgebildet sind, daß die Kunststoffteile mittels der Verbindungsmittel zu von selbst zusammenhaltenden und handhabbaren Transport- bzw. Verpackungseinheiten zusammenfügbar sind.

Mit dem Begriff "zusätzliche Verbindungsmittel" sind dabei im vorliegenden Fall jegliche Verbindungsmittel wie Clips, Rasten oder Schnappverbindungen bezeichnet, deren angenommenes oder auch tatsächliches Fehlen für den Fall, daß sie nach dem Spritzgießvorgang von dem Kunststoffteil abgetrennt werden, die vorgesehene Funktion der hergestellten Kunststoffteile nicht beeinträchtigt. Daraus ergibt sich, daß die genannten Verbindungsmittel zusätzlich und unabhängig von der vorgesehenen Hauptfunktion der Kunststoffteile an diese angegossen werden. Gleichwohl ist es jedoch möglich, derartige zusätzliche Verbindungsmittel in die Form der hergestellten Kunststoffteile zu integrieren, wie dies in einem nachfolgend dargestellten Ausführungsbeispiel gezeigt ist.

Mit Hilfe der zusätzlichen Verbindungsmittel ist es möglich, die hergestellten Kunststoffteile unabhängig von ihrer Form zu in sich stabilen Stapeln zusammenzufügen. Derartige Stapel, in denen die hergestellten Kunststoffteile dann zwangsläufig in einer definierten Position und Lage zueinander angeordnet sind, sind in der weiteren Handhabung vergleichsweise einfach und unkompliziert, da sie stabil sind und nicht von selbst auseinanderfallen können. Des weiteren ist aufgrund der definierten Position und Lage der Kunststoffteile eine nachfolgende automatisierte Weiterverarbeitung vereinfacht. Darüber hinaus ist es aufgrund der Tatsache, daß die Kunststoffteile durch einen Spritzgießvorgang geformt werden, möglich, verschiedenste und komplex geformte Kunststoffteile herzustellen. Somit ist die eingangs gestellte Aufgabe vollständig gelöst.

Das erfindungsgemäße Verfahren und die dementsprechende Vorrichtung besitzen darüber hinaus den Vorteil, daß die damit hergestellten Kunststoffteile dann, wenn sie zu den erfindungsgemäßen Transport- bzw. Verpackungseinheiten zusammengestellt sind, sehr viel besser gegen Beschädigungen geschützt sind als in dem Fall, daß die Kunststoffteile ungeordnet und lose gesammelt werden. Ein weiterer Vorteil ist, daß die Kunststoffteile in den erfindungsgemäß zusammengestellten Transport- bzw. Verpackungseinheiten sehr einfach und automatisiert verpackt werden können, beispielsweise in einer Folie eingeschweißt werden können. Hierdurch wird insbesondere bei der Herstellung von Einwegbestecken die Hygiene verbessert. Auch ist es so auf sehr einfache Weise möglich, bei Einwegbestecken zusammengehörige Sets aus Messer, Gabel und Löffel zusammenzustellen.

Bei einer Weiterbildung des erfindungsgemäßen Verfahrens werden die Kunststoffteile zu Blöcken gestapelt.

Diese Maßnahme hat den Vorteil, daß für nachfolgende Transport- bzw. Verpackungszwecke besonders kompakte Gruppen von Kunststoffteilen entstehen.

In einer alternativen Weiterbildung werden die Kunststoffteile derart zusammengefügt, daß sie Flächen oder Streifen von Kunststoffteilen bilden.

Diese Maßnahme besitzt den Vorteil, daß die Kunststoffteile trotz ihrer gegenseitigen Verbindung in nachfolgenden Weiterverarbeitungsstufen einzeln erreichbar sind.

Bevorzugt ist weiterhin, wenn die Kunststoffteile mittels des Greifwerkzeugs zusammengefügt werden.

Diese Maßnahme hat den Vorteil, daß das Zusammenfügen in einem Arbeitsgang mit dem Entnehmen aus dem Formwerkzeug stattfinden kann, so daß sowohl bauliche Vorrichtungen wie auch Zeit gespart werden.

Besonders bevorzugt ist, wenn die Kunststoffteile derart zusammengefügt werden, daß sie nach dem Zusammenfügen nur durch Aufbringen einer vorbestimmten Trennkraft voneinander lösbar sind.

Diese Maßnahme hat den Vorteil, daß die Transport- bzw. Verpackungseinheiten einem nachfolgenden, ebenfalls automatisierten Bearbeitungs- oder Verarbeitungsvorgang unterzogen werden können, wobei in diesem nachfolgenden Vorgang jeweils die vorbestimmte Trennkraft aufgebracht werden muß, um die zusammengefügten Teile wieder zu vereinzeln.

In einer Ausgestaltung des erfindungsgemäßen Verfahrens werden die Kunststoffteile unmittelbar aneinander befestigt.

Dies besitzt den Vorteil, daß auf zusätzliche Trägerelemente und dergleichen verzichtet werden kann, wodurch der Materialaufwand verringert ist.

In einer alternativen Ausgestaltung werden die Kunststoffteile an einem gemeinsamen Verbindungsmittel befestigt.

Diese Maßnahme besitzt den Vorteil, daß Transport- bzw. Verpackungseinheiten so in einer von der Form der einzelnen Kunststoffteile weitgehend unabhängigen, standardisierbaren Art und Weise zusammengestellt werden können. Damit ist es auf besonders einfache Weise möglich, Kunststoffteile verschiedener Form in ein und derselben Transport- bzw. Verpackungseinheit zusammenzufügen.

In einer weiteren Ausgestaltung werden die Kunststoffteile zerstörungsfrei lösbar zusammengefügt, alternativ ist aber auch möglich, die Kunststoffteile durch Materialzerstörung, insbesondere durch Schneiden, Reißen oder Brechen, lösbar aneinander zu befestigen.

Dies sind Maßnahmen, aufgrund derer für jeden Einsatzfall die jeweils optimale Verbindungsmöglichkeit realisiert werden kann.

Unabhängig von der Art der Befestigung der Teile miteinander können die Kunststoffteile mittels sogenannter verlorener Verbindungsmittel miteinander verbunden sein, die ihrerseits von den Kunststoffteilen lösbar sind.

Diese Maßnahme hat den Vorteil, daß das Kunststoffteil schlußendlich wieder ohne jedes Verbindungsmittel zur Verfügung steht, das im Verlaufe der Verarbeitung des Kunststoffteils vollständig gelöst und separat entsorgt oder wiederverwendet wird. Die Maßnahme ist besonders vorteilhaft, jedoch nicht allein darauf beschränkt, wenn die Kunststoffteile zu Flächen oder Streifen zusammengefügt werden, beispielsweise mit Hilfe von Trägerstreifen.

Gemäß einer weiteren Ausgestaltung des erfindungsgemäßen Verfahrens werden als zusätzliche Verbindungsmittel Clips an einer Außenkontur der Kunststoffteile angegossen, und die Kunststoffteile werden durch Zusammenfügen der Clips zusammengefügt.

Dementsprechend ist ein erfindungsgemäßes Kunststoffteil dadurch gekennzeichnet, daß die zusätzlichen Verbindungsmittel Clips beinhalten, die an zumindest einer Seite über eine Außenkontur des Kunststoffteils hinausragen.

Die Bezeichnung "Clip" umfaßt dabei im folgenden jegliche Arten von Verbindungsmitteln, deren gegenseitiges Zusammenfügen eine feste Verbindung zwischen den Kunststoffteilen ermöglicht. Die Clips können Rasten beinhalten, die beim Zusammenfügen ineinanderschnappen. Alternativ können die Clips bspw. zwei zueinander komplementäre Formabschnitte beinhalten, die beim Zusammenfügen formschlüssig ineinandergefügt werden. Aufgrund der Tatsache, daß die Clips an einer Außenkontur der Kunststoffteile angegossen sind, ist es möglich, die einzelnen Kunststoffteile durch einfaches Abtrennen der Clips voneinander zu trennen. Hierdurch ist ein besonders einfaches, automatisiertes Zusammenfügen und Lösen der Kunststoffteile möglich. Des weiteren besitzt die Maßnahme aufgrund der außen angebrachten Clips den Vorteil, daß auch bei kompliziert geformten Kunststoffteilen jederzeit schnell erkennbar ist, ob diese mit den ihnen benachbart liegenden Kunststoffteilen zusammengefügt sind oder nicht.

In einer weiteren Ausgestaltung des erfindungsgemäßen Verfahrens werden die Kunststoffteile mit einer Preßpassung aneinander befestigt.

Bei einem dementsprechenden Kunststoffteil beinhalten die zusätzlichen Verbindungsmittel zumindest zwei zueinander komplementäre Formabschnitte, die an einander gegenüberliegenden Seiten des Kunststoffteils ausgebildet sind.

Diese Maßnahme besitzt den Vorteil, daß die einzelnen Kunststoffteile hierdurch sehr einfach mit einem gewissen Druck fest aufeinander stapelbar sind und gleichzeitig durch einfaches Auseinanderziehen auch wieder voneinander lösbar sind. Darüber hinaus besitzt die Maßnahme den Vorteil, daß eine Preßpassung sehr gut in die Formgebung der herzustellenden Kunststoffteile integrierbar ist, wodurch die Erscheinung und die eigentliche Funktion der Kunststoffteile nur geringfügig oder gar nicht gegenüber gleichartigen Teilen ohne zusätzliche Verbindungsmittel verändert ist.

In einer weiteren Ausgestaltung der zuvor genannten Maßnahme sind die komplementären Formabschnitte in die Formgebung des Kunststoffteils integriert.

Diese Maßnahme besitzt den bereits zuvor angedeuteten Vorteil, daß die zusätzlichen Verbindungsmittel bei dem erfindungsgemäßen Kunststoffteil nicht in nachteiliger oder hinderlicher Weise in Erscheinung treten. Beispielsweise bei einem Einwegbesteck ist hierdurch die Gefahr einer Verletzung an zusätzlichen hervorstehenden Kanten vermieden.

In einer weiteren Ausgestaltung des erfindungsgemäßen Kunststoffteils beinhalten die zusätzlichen Verbindungsmittel einen Abstandhalter.

Diese Maßnahme besitzt den Vorteil, daß die einzelnen Kunststoffteile beim erfindungsgemäßen Zusammenfügen in einem entsprechenden Abstand voneinander angeordnet werden. Dies wirkt sich insbesondere dann vorteilhaft aus, wenn die Kunststoffteile an sich eine Form besitzen, die ein Zusammenstapeln nicht erlaubt, wie dies bspw. bei stark hervorspringenden Kanten oder Ecken der Fall ist. Die Maßnahme besitzt somit den Vorteil, daß auch derart ungünstig geformte Kunststoffteile dem erfindungsgemäßen Verfahren entsprechend zu stabilen Stapeln zusammengefügt werden können.

In einer weiteren Ausgestaltung des erfindungsgemäßen Verfahrens werden bei jeweils einem ausgewählten Kunststoffteil einer Reihe von Kunststoffteilen die zusätzlichen Verbindungsmittel zumindest einseitig funktionslos gemacht, so daß das ausgewählte Kunststoffteil beim Zusammenfügen mit einem vorhergehenden bzw. nachfolgenden Kunststoffteil der Reihe unverbunden bleibt.

Eine dementsprechende Ausgestaltung der erfindungsgemäßen Vorrichtung besteht darin, daß sie weiterhin Mittel aufweist, um die zusätzlichen Verbindungsmittel ausgewählter Kunststoffteile funktionslos zu machen.

Die genannte Maßnahme besitzt den Vorteil, daß hierdurch das Zusammenstellen der Kunststoffteile in beliebigen Stückzahlen wesentlich erleichtert wird. Darüber hinaus ist es hierdurch auch möglich, ein als fehlerhaft erkanntes Kunststoffteil auf einfache Weise auszusortieren. Hintergrund der genannten Maßnahme ist, daß es vergleichsweise einfach möglich ist, die zusätzlichen Verbindungsmittel eines ausgewählten Kunststoffteils gezielt und individuell zu deaktivieren. Bei einer Preßpassung kann dies bspw. dadurch geschehen, daß einer der beiden zueinander komplementären Formabschnitte des ausgewählten Kunststoffteils mit einem Stempel aufgeweitet wird. Hierdurch wird dann das Zustandekommen der Preßpassung mit dem komplementären Formabschnitt eines anderen Kunststoffteils verhindert. Es versteht sich dabei, daß die zusätzlichen Verbindungsmittel des ausgewählten Kunststoffteils nur in einer Richtung, d.h. einseitig, funktionslos gemacht werden, wenn der Grund für dieses Vorgehen ist, einen neuen Stapel von Kunststoffteilen zu beginnen. Demgegenüber werden zum Aussortieren eines fehlerhaften Kunststoffteils die Verbindungsmittel in jeder Richtung funktionslos gemacht, so daß dieses ausgewählte Kunststoffteil dann mit keinem anderen Kunststoffteil zusammengefügt werden kann.

In einer Ausgestaltung der zuvor genannten Maßnahme werden die zusätzlichen Verbindungsmittel bei dem erfindungsgemäßen Verfahren nach dem Spritzgießen von dem ausgewählten Kunststoffteil abgetrennt.

Diese Maßnahme ist besonders vorteilhaft, wenn als zusätzliche Verbindungsmittel die vorstehend erläuterten Clips verwendet werden. Vorzugsweise sind diese aus diesem Grund mit einer Sollbruchstelle an die hergestellten Kunststoffteile angegossen. Hierdurch ist es dann besonders einfach möglich, die zusätzlichen Verbindungsmittel an dem ausgewählten Kunststoffteil funktionslos zu machen.

In einer alternativen Ausgestaltung der zuvor genannten Maßnahme werden die zusätzlichen Verbindungsmittel nach dem Spritzgießen des ausgewählten Kunststoffteils mit einem Stempel verformt.

Diese Maßnahme ist besonders vorteilhaft, wenn die zusätzlichen Verbindungsmittel eine Preßpassung beinhalten. In diesem Fall ist es nämlich besonders einfach möglich, diese durch Verformen mit einem Stempel funktionslos zu machen.

Besonders bevorzugt ist es im Rahmen der vorliegenden Erfindung, die zusätzlichen Verbindungsmittel zum Führen der Kunststoffteile zu verwenden. Dies kann entweder dadurch geschehen, daß die Kunststoffteile einzeln an den Verbindungsmitteln geführt werden, besonders bevorzugt ist jedoch, wenn die zusätzlichen Verbindungsmittel zum Führen der aus den Kunststoffteilen zusammengefügten Transport- und Verpackungseinheiten verwendet werden.

Auf diese Weise wird ein weiterer wesentlicher Vorteil der Erfindung erreicht. Die Erfindung bezieht sich nämlich, wie bereits erwähnt wurde, auf Teile, die von Hause aus nicht stapelbar sind, insbesondere also auf solche Teile, die eine äußerliche unregelmäßige Oberfläche aufweisen. Derartige Teile sind jedoch von Hause aus schlecht handhabbar, da sie keine definierten Führungsflächen oder Führungskanten besitzen. Man macht sich daher bei den vorstehend erwähnten Ausführungsbeispielen der Erfindung die Tatsache zunutze, daß ohnehin das Kunststoffteil mit einem Verbindungselement versehen werden muß, das für die normale Bestimmung des Kunststoffteils an sich nicht notwendig ist. Dieses Verbindungsmittel oder Verbindungselement kann daher so ausgelegt werden, daß es nicht nur die Funktion des Verbindens, sondern auch die Funktion des Führens ausübt, wenn das Verbindungsmittel mit entsprechenden Flächen oder Kanten versehen wird. Dies gilt insbesondere dann, wenn verlorene Verbindungsmittel verwendet werden, die schlußendlich am verwendeten Kunststoffteil nicht mehr vorhanden sind.

Wenn das Kunststoffteil z.B. ein Verschlußelement für mit Getränken gefüllte Kartonverpackungen ist, so kann ein Stapel dieser Verschlußelemente an den Verbindungsmitteln zwischen diesen Verschlußelementen in einer automatisierten Abfüllanlage verwendet werden, wobei die Verschlußelemente als Paket gemeinsam transportiert und dann vereinzelt werden. Ein Handhabungsgerät kann dann das einzelne Verschlußelement an dem Verbindungsmittel in definierter Ausrichtung und Lage erfassen und innerhalb der Abfüllanlage zum Verschließen der mit dem Getränk gefüllten Kartonverpackung verwenden. Das Verbindungsmittel kann dann an dem Verschlußelement verbleiben oder von diesem auch abgetrennt werden.

Es ist weiterhin bevorzugt, wenn die Kunststoffteile mittels eine Paketbildung ermöglichenden Haltern zusammengefügt werden.

Diese Maßnahme hat den Vorteil, daß insbesondere bei wiederum sehr unregelmäßig geformten Kunststoffteilen durch die Halter ein definiertes Stapeln der Kunststoffteile, d.h. eine definierte paketweise Ausrichtung zueinander in möglichst geringem Abstand erreicht wird.

Hierzu können die Kunststoffteile z.B. mittels Abstandshaltern im Abstand zueinander zusammengefügt werden.

Das erfindungsgemäße Verfahren kann für eine Vielzahl unterschiedlicher Kunststoffteile eingesetzt werden. Allgemein gesprochen handelt es sich bevorzugt um solche Teile, die in einer automatisierten Anlage weiterverarbeitet werden können, bspw. die weiter oben erläuterten Verschlußelemente für mit Getränken gefüllte Kartonverpackungen.

Weitere bevorzugte Anwendungsbeispiele des erfindungsgemäßen Verfahrens bestehen in der Herstellung von Einwegbestecken oder von Kabelbindern.

Bei weiteren Ausführungsformen des erfindungsgemäßen Verfahrens werden die zusammengefügten Transport- bzw. Verpackungseinheiten nach dem Zusammenfügen verpackt. Besonders vorteilhaft ist, wenn die Kunststoffteile dabei steril verpackt werden, was z.B. im Falle von Einwegbestecken besonders vorteilhaft ist. Bei besonderen Anwendungsfällen, insbesondere bei Komponenten für die Halbleiterindustrie, kann es vorteilhafterweise vorgesehen werden, die Kunststoffteile unter Reinraumbedingungen bzw. für Reinraumbedingungen zu verpacken, d.h. mit extremen Anforderungen an die Sauberkeit bzw. Abwesenheit von Schmutzpartikeln.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen Stapel Einweglöffel nach der Erfindung,
- Fig. 2: einen Stapel Kabelbinder nach der Erfindung,
- Fig. 3: eine schematische Darstellung einer erfindungsgemäßen Vorrichtung,
- Fig. 4: einen Ausschnitt aus dem Stapel der Einweglöffel gemäß Fig. 1 entlang der Schnittlinie IV-IV,
- Fig. 5a - c: Verfahrensschritte, mit denen die zusätzlichen Verbindungsmittel bei einem Einweglöffel gemäß Fig. 4 funktionslos gemacht werden,
- Fig. 6: einen Stapel Einweglöffel ähnlich demjenigen in Fig. 4 in einem alternativen Ausführungsbeispiel,
- Fig. 7a - c: Verfahrensschritte zum Funktionslosmachen der zusätzlichen Verbindungsmittel bei einem Einweglöffel gemäß Fig. 6,
- Fig. 8: eine schematische Darstellung des erfindungsgemäßen Verfahrensschrittes, bei dem Kunststoffteile mit Hilfe von Clips zusammengefügt werden,
- Fig. 9: eine alternative Ausführung des Verfahrensschritts gemäß Fig. 8 und
- Fig. 10: ein weiteres Ausführungsbeispiel einer zusammengestellten Transport- bzw. Verpackungseinheit.

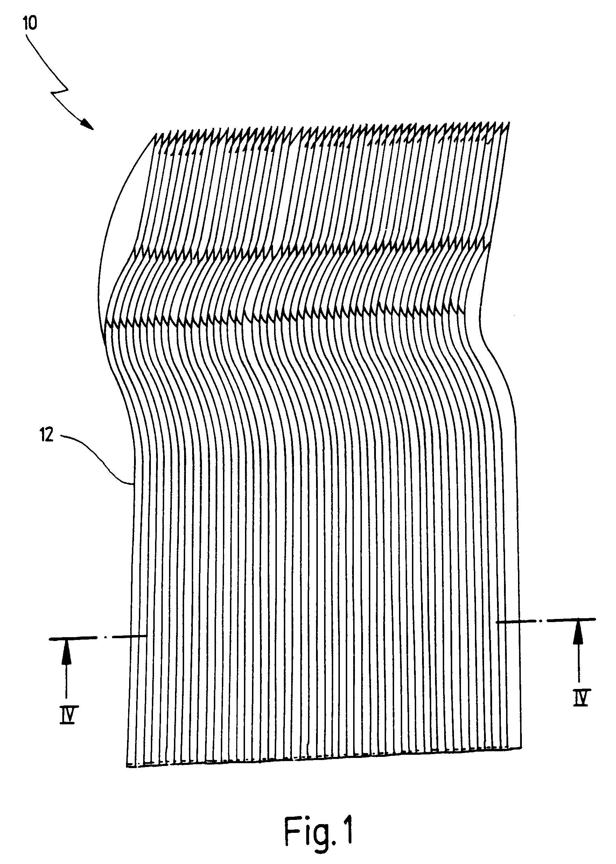

In Fig. 1 ist ein Stapel Einweglöffel in seiner Gesamtheit mit dem Bezugszeichen 10 bezeichnet. Bei den Einweglöffeln 10 handelt es sich - ebenso wie bei den nachstehend noch genannten anderen Kunststoffteilen - im Rahmen der vorliegenden Anmeldung um Teile, die von Hause aus nicht in einer Weise stapelbar sind, daß sie zusammenhaltende, handhabbare Blöcke bilden können. Insoweit handelt es sich bei Löffeln zwar um Teile, die in dem Sinne stapelbar sind, daß man sie durch Aneinanderlegen dicht packen kann; handhabbare Stapel entstehen dabei jedoch nicht, weil übliche Löffel in dichter Packung nur lose aneinander liegen. Im übrigen handelt es sich im Rahmen der vorliegenden Erfindung bevorzugt um solche Teile, die in automatisierten Anlagen weiterverarbeitbar sind.

Der Stapel 10 besteht aus insgesamt 50 Einweglöffeln 12, die nach dem erfindungsgemäßen Verfahren in einem Spritzgießvorgang hergestellt worden sind und sodann mit Hilfe der nachfolgend näher dargestellten zusätzlichen Verbindungsmittel zusammengefügt worden sind. Unter "Stapel" ist dabei, wie bereits angedeutet, eine insgesamt handhabbare Einheit gemeint, bei der die Elemente (Löffel) derart zusammengefügt sind, daß sie nicht auseinanderfallen, sondern vielmehr nur durch Aufbringen einer vorbestimmten Trennkraft wieder voneinander lösbar sind.

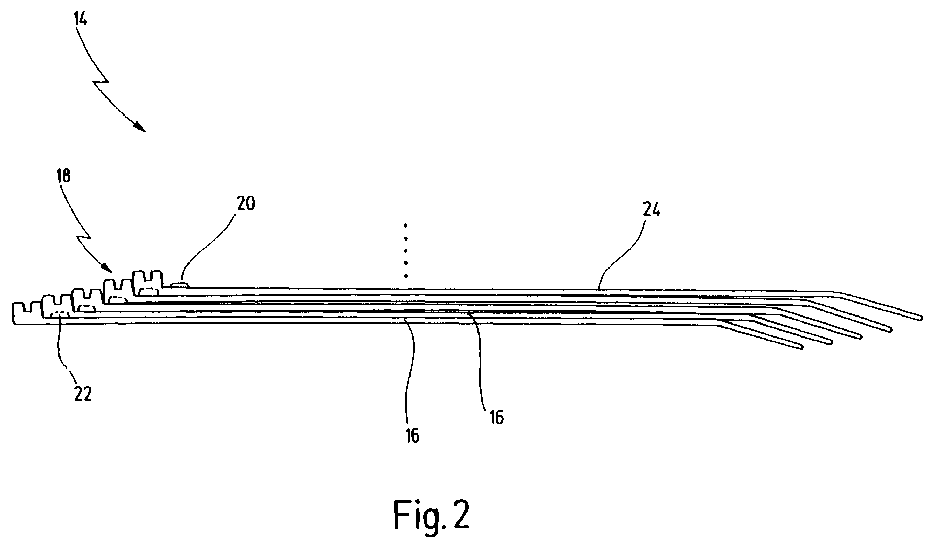

In Fig. 2 ist ein Stapel von an sich bekannten Kabelbindern in seiner Gesamtheit mit dem Bezugszeichen 14 bezeichnet. Der Stapel 14 umfaßt in diesem Fall fünf Kabelbinder 16. Es versteht sich jedoch, daß der Stapel 14 auch jede beliebige größere Anzahl von Kabelbindern 16 beinhalten kann.

Mit dem Bezugszeichen 18 sind zusätzliche Verbindungsmittel bezeichnet, die im vorliegenden Fall aus einem Zapfen 20 und einer Ausnehmung 22 bestehen. Unter "Verbindungsmittel" sind im Rahmen der vorliegenden Erfindung Elemente zu verstehen, die für das betreffende Teil (Löffel) nach dessen Bestimmung nicht notwendig sind. Damit unterscheiden sich diese Teile mit ihren Verbindungsmitteln z.B. von Bechern, die von Hause aus stapelbar, d.h. durch ihre bestimmungsgemäße Form miteinander verbindbar sind. Der Zapfen 20 und die Ausnehmung 22 sind an einander gegenüberliegenden Seiten jedes einzelnen Kabelbinders 16 angeordnet. Wie anhand der Darstellung leicht zu erkennen ist, werden die einzelnen Kabelbinder 16 zu dem Stapel 14 zusammengefügt, indem sie mit einem gewissen Druck derart aufeinander abgelegt werden, daß der zapfen 20 des jeweils unteren Kabelbinders 16 in die Ausnehmung 22 des auf ihm abgelegten Kabelbinders 24 eingreift. Der Zapfen 20 und die Ausnehmung 22 bilden dabei eine Preßpassung, durch die die Kabelbinder 16, 24 einerseits fest und andererseits jedoch trotzdem lösbar aneinander befestigt sind.

Die Verbindungsmittel können - wie vorstehend beispielhaft beschrieben - eine zerstörungsfreie lösbare Verbindung herstellen. Die Verbindung kann aber auch durch Materialzerstörung lösbar sein, insbesondere durch Schneiden, Reißen oder Brechen.

In beiden Fällen kann man "verlorene" Verbindungsmittel einsetzen, d.h. Verbindungsmittel, die mit den Teilen ihrerseits ebenfalls lösbar verbunden sind, so daß sie schlußendlich ganz entfernt werden können, also an den voneinander gelösten Teilen nicht mehr vorhanden sind.

Die Verbindungsmittel können dabei noch eine weitere Funktion ausüben, nämlich eine Führungsfunktion. Dies gilt insbesondere bei solchen Kunststoffteilen, die geometrisch weitgehend undefiniert sind, z.B. Löffel, und daher an sich schlecht handhabbar sind. Die Verbindungsmittel können daher beim einzelnen Teil oder insbesondere auch beim gestapelten Paket deren Führbarkeit verbessern oder überhaupt erst ermöglichen. Hierunter ist das Aufnehmen, das Bewegen in Schienen, das Zuführen, das Verpacken, allgemeine weitere Arbeitsgänge, das Bedrucken, das Lackieren, das Beschriften, das Metallisieren, insgesamt also eine automatische Abarbeitung zu verstehen.

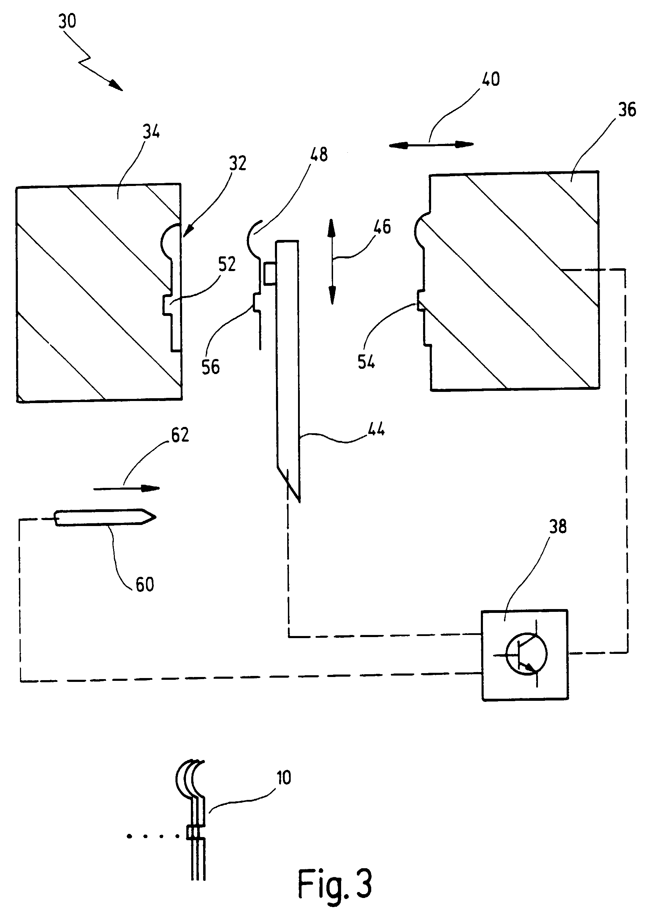

In Fig. 3 ist eine erfindungsgemäße Vorrichtung in ihrer Gesamtheit mit dem Bezugszeichen 30 bezeichnet. Die Vorrichtung 30 weist einen Formhohlraum 32 auf, der von den Werkzeughälften 34, 36 einer hier nur schematisch angedeuteten Spritzgieß maschine gebildet wird. Die Werkzeughälfte 36 ist unter Steuerung einer Steuereinheit 38 in Richtung des Pfeils 40 bewegbar, wodurch der Formhohlraum 32 geöffnet und geschlossen wird. In dem in Fig. 3 hergestellten Betriebszustand ist der Formhohlraum 32 geöffnet.

Mit dem Bezugszeichen 44 ist ein Greifwerkzeug bezeichnet, das ebenfalls unter Steuerung der Steuereinheit 38 in Richtung des Pfeils 46 zwischen die Werkzeughälften 34, 36 eingefahren werden kann, um ein hergestelltes Kunststoffteil 48 aus dem Formhohlraum 32 zu entnehmen.

Erfindungsgemäß weist der Formhohlraum 32 Elemente 52, 54 auf, die im vorliegenden Fall an den beiden Werkzeughälften 34, 36 angeordnet sind und die geeignet sind, zusätzliche Verbindungsmittel 56 an den herzustellenden Kunststoffteilen 48 auszubilden.

Mit dem Bezugszeichen 60 ist ein Stempel bezeichnet, der ebenfalls unter Steuerung der Steuereinheit 38 in Richtung des Pfeils 62 verfahrbar ist. Mit Hilfe des Stempels 60 ist es möglich, die zusätzlichen Verbindungsmittel 56 ausgewählter Kunststoffteile 48 gezielt funktionslos zu machen, um deren Zusammenfügung mit einem vorhergehenden und/oder einem nachfolgenden Kunststoffteil zu verhindern.

Im Betrieb der Vorrichtung 30 werden die entnommenen Kunststoffteile 48 entsprechend dem erfindungsgemäßen Verfahren von dem Greifwerkzeug 44 mit Hilfe der zusätzlichen Verbindungsmittel 56 zu dem Stapel 10 zusammengefügt. Der Stapel 10 bildet somit eine Transport- bzw. Verpackungseinheit bestehend aus den hergestellten Kunststoffteilen, in diesem Fall also den Einweglöffeln. Das Greifwerkzeug 44 kann alternativ die Kunststoffteile 48 nur entnehmen und dann zu einer separaten Stapelstation überführen, wo sie zusammengefügt werden.

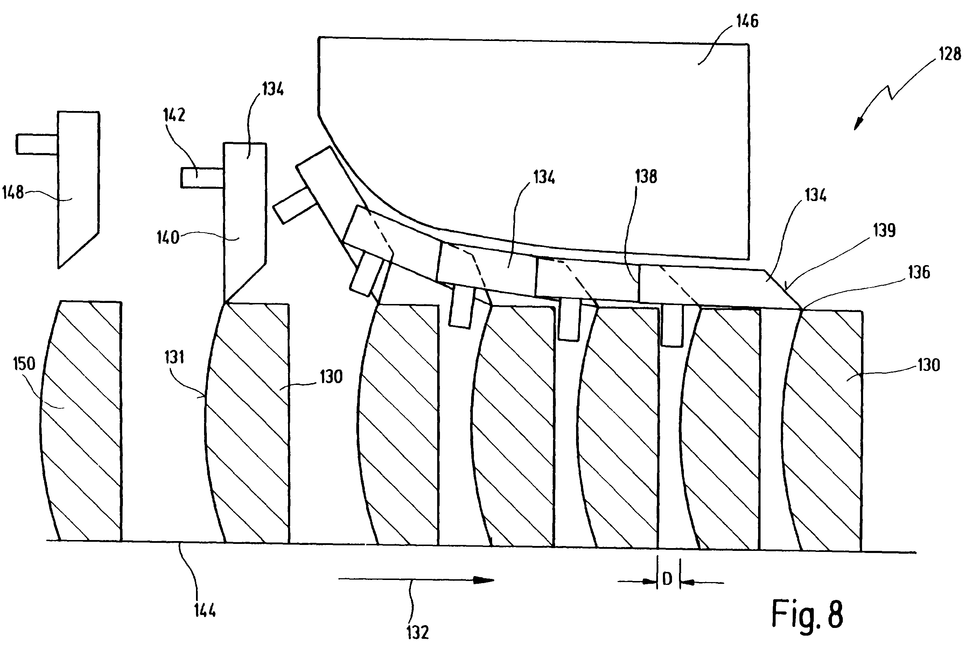

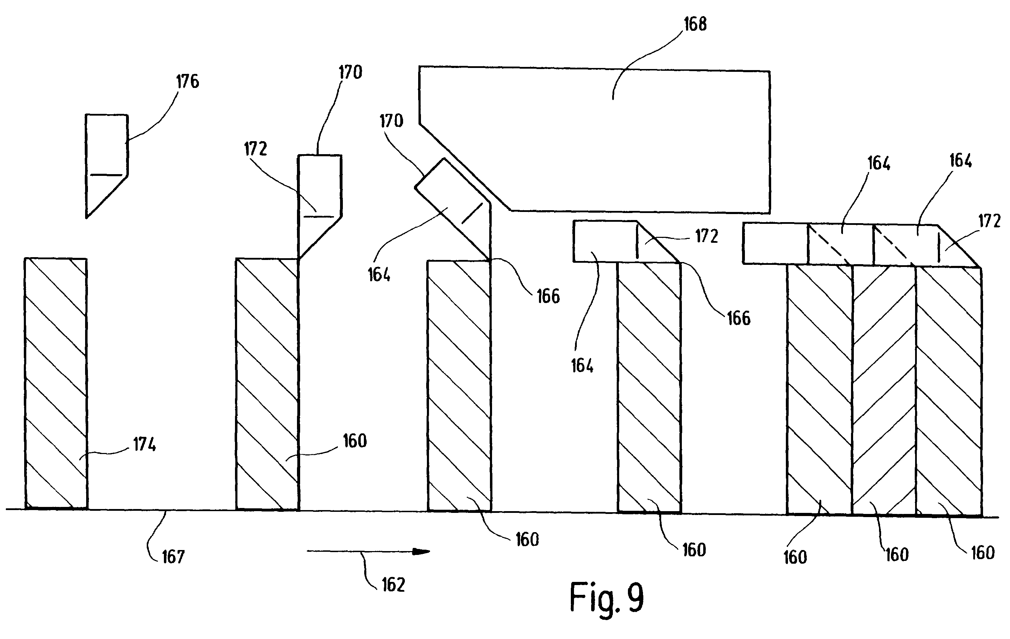

Es versteht sich, daß das Greifwerkzeug 44 abweichend von der hier gezeigten schematischen Darstellung auch aus mehreren einzelnen Komponenten bestehen kann und daß das Kunststoffteil 48 beim Entnehmen aus dem Formhohlraum 32 und Ablegen auf dem Stapel 10 von einer Komponente zur anderen weitergegeben werden kann. Dies kann beinhalten, daß das Kunststoffteil 48 nach seiner Entnahme aus dem Formhohlraum 32 in unterschiedlichen Positionen gehalten und übergeben wird, bevor es auf dem Stapel 10 abgelegt wird. Für die Durchführung des erfindungsgemäßen Verfahrens ist es dabei allein von Bedeutung, daß das Kunststoffteil 48 stets in einer derart definierten Position gehalten wird, daß es mit Hilfe der zusätzlichen Verbindungsmittel 56 zuverlässig mit den bereits im Stapel 10 befindlichen Kunststoffteilen zusammengefügt wird. Dabei ist es auch nicht unbedingt erforderlich, daß das Kunststoffteil 48 stets von einem Greifer des Greifwerkzeugs 44 festgehalten wird. Vielmehr ist es ebenso möglich, daß das Kunststoffteil 48 auf seinem Weg von dem Formhohlraum 32 zu dem Stapel 10 von einem hier nicht dargestellten Transportband befördert wird. Ein dementsprechendes Ausführungsbeispiel wird nachfolgend anhand der Fig. 8 und 9 erläutert.

Wie bereits erwähnt wurde, kann das erfindungsgemäße Verfahren vorzugsweise zum Herstellen von Teilen verwendet werden, die in einer automatisierten Anlage weiterverarbeitet werden können.

Im Rahmen der vorliegenden Beschreibung werden dabei Einweglöffel und Kabelbinder als Beispiele erwähnt, die Erfindung ist jedoch keinesfalls auf diese Beispiele beschränkt. So können Z.B. auch Verschlußelemente im Rahmen der vorliegenden Erfindung behandelt werden, insbesondere solche Verschlußelemente, die für mit Getränken gefüllte Kartonverpackungen verwendet werden. Diese Teile sind von Hause aus sehr unregelmäßig geformt und daher schwer handhabbar, so daß auch die bereits beschriebene Führungsfunktion der Verbindungsmittel hier eine Rolle spielt.

Es ist weiterhin im Rahmen der vorliegenden Erfindung bevorzugt, wenn die Kunststoffteile nach dem Zusammenfügen verpackt werden, wie in der Zeichnung nicht näher dargestellt ist. Die Verpackung kann dabei unter sterilen Bedingungen erfolgen, was z.B. bei Einwegbestecken zweckmäßig ist. Bei noch höheren Sauberkeitsanforderungen kann auch unter Reinraumbedingungen verpackt werden.

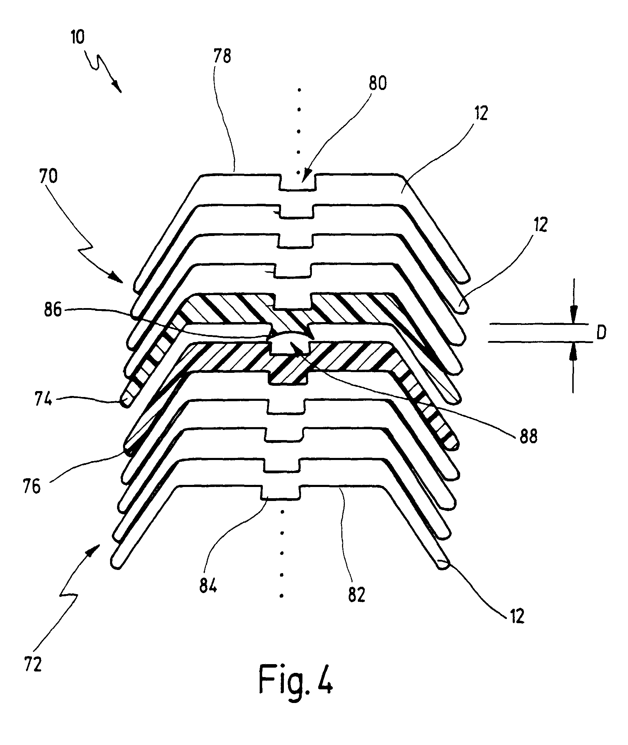

In der Darstellung in Fig. 4 ist der Stapel 10 von Einweglöffeln 12 aufgrund der nachfolgend erläuterten Maßnahmen in einen oberen Stapel 70 und einen unteren Stapel 72 unterteilt. Die beiden Stapel 70, 72 liegen dabei zwar aufeinander, sie sind jedoch nicht fest miteinander verbunden. Grund hierfür ist, daß die zusätzlichen Verbindungsmittel des untersten Löffels 74 des oberen Stapels 70 auf der Unterseite funktionslos gemacht worden sind, so daß der unterste Löffel 74 nicht mit dem obersten Löffel 76 des unteren Stapels 72 fest verbunden ist. Aus Gründen der Übersichtlichkeit sind dabei in der vorliegenden Darstellung nur die beiden genannten Löffel 74, 76 mit der für eine Querschnittsansicht üblichen Schraffur gezeigt.

Jeder der Löffel 12 bzw. 74, 76 weist an seiner Oberseite 78 eine Ausnehmung 80 auf. Demgegenüber ist an der Unterseite 82 jedes Löffels 12 bzw. 74, 76 ein Zapfen 84 angeordnet.

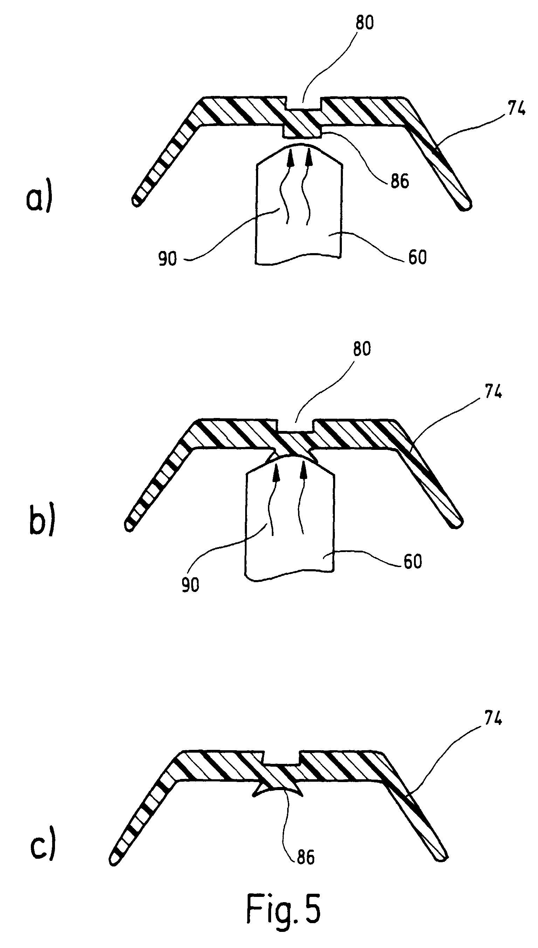

Der Zapfen 86 des Löffels 74 ist, wie anhand der Verfahrensschritte in den Fig. 5a bis 5c dargestellt ist, mit einem Stempel 60 derart aufgeweitet worden, daß er nicht mehr in die Ausnehmung 88 des Löffels 76 hineinpaßt. Hierdurch wird eine feste Zusammenfügung der Löffel 74, 76 verhindert. Vielmehr kommt der Löffel 74 in einem Abstand D lose auf dem Löffel 76 zu liegen.

Wie anhand Fig. 5a und 5b zu erkennen ist, weist der Stempel 60 eine an seinem Ende spitz zulaufende Form auf, mit der der Zapfen 86 auf geweitet wird. Vorzugsweise ist der Stempel 60 beim Umformen des Zapfens 86 erwärmt, was durch die Pfeile 90 angedeutet ist.

Wie anhand der Darstellung in den Fig. 4 und 5 weiterhin erkennbar ist, sind die zusätzlichen Verbindungsmittel des Löffels 74 hier nur auf einer Seite, d.h. in einer Richtung, funktionslos gemacht. Die Folge hiervon ist, daß der Stapel 10 in die voneinander trennbaren Stapel 70, 72 unterteilt wird. Der Löffel 74 ist hierbei Bestandteil des oberen Stapels 70. Für den Fall, daß der Löffel 74 bspw. aufgrund einer festgestellten Beschädigung gänzlich aussortiert werden soll, kann seine Ausnehmung 80 mit einem hier nicht dargestellten zweiten Stempel ebenfalls aufgeweitet werden. Dies hat dann zur Folge, daß der Löffel 74 auch mit den Löffeln 12 des oberen Stapels 70 unverbunden bleibt. In diesem Fall läßt sich der Löffel 74 dann einfach aus der Reihe der hergestellten Löffel aussortieren.

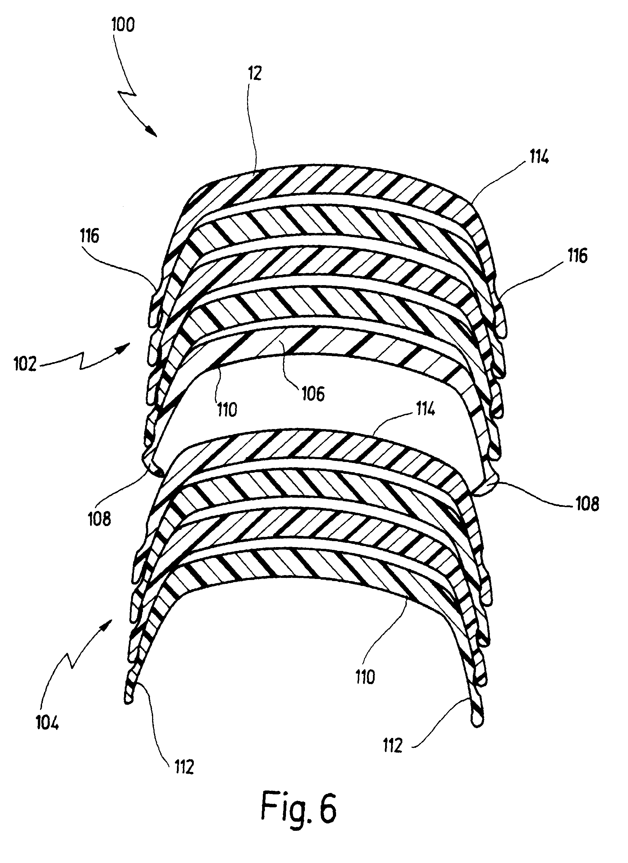

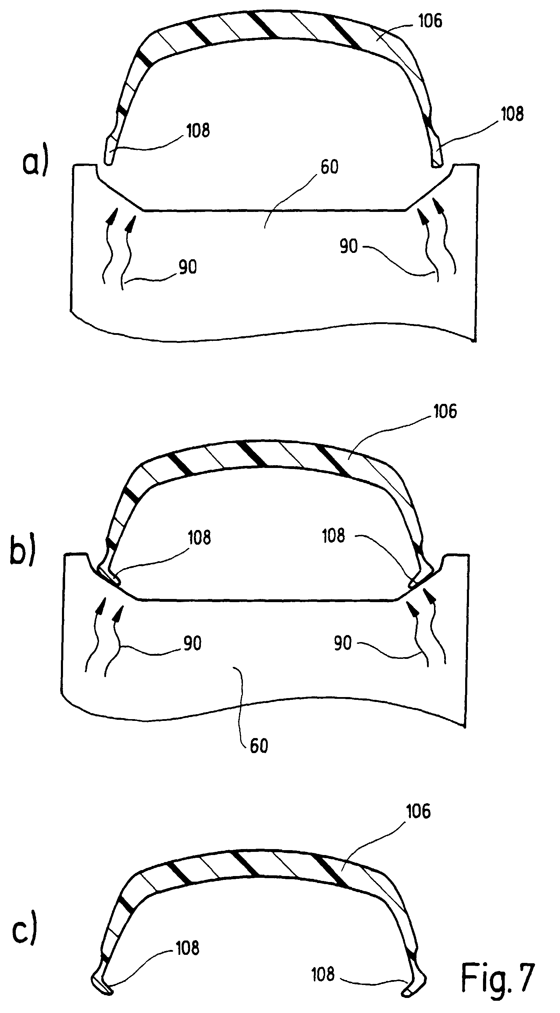

Die Fig. 6 und 7 zeigen ein alternatives Ausführungsbeispiel, bei dem ein Stapel von Löffeln 12 in seiner Gesamtheit mit dem Bezugszeichen 100 bezeichnet ist. Der Stapel 100 ist wiederum auf einfache Weise in einen oberen Stapel 102 und einen unteren Stapel 104 teilbar, da der unterste Löffel 106 des oberen Stapels 102 mit dem obersten Löffel des unteren Stapels 104 wiederum unverbunden ist. Grund hierfür ist, daß Enden 108 des untersten Löffels 106 wie in Fig. 7 dargestellt mit Hilfe eines Stempels 60 verformt wurden.

Die Enden 108 des Löffels 106 weisen ebenso wie die Enden der übrigen Löffel 12 in diesem Ausführungsbeispiel an den Innenseiten 110 der Löffel einen ersten Formabschnitt 112 und an den Außenseiten 114 der Löffel einen zweiten Formabschnitt 116 auf. Die Formabschnitte 112 und 116 sind komplementär zueinander ausgebildet und in die gesamte Formgebung der Löffel 12 bzw. 106 integriert. Solange die Enden 108 der Löffel 12 nicht gemäß den Verfahrensschritten in den Fig. 7a bis 7c umgeformt sind, bilden die Formabschnitte 112, 116 zweier aufeinander abgelegter Löffel 12 eine Preßpassung, durch die die Löffel zusammengehalten werden. Durch das Umbiegen der Enden 108 wird eine derartige Zusammenfügung verhindert.

Es versteht sich, daß die Formgebung der einzelnen Formabschnitte 112, 116 bzw. der Ausnehmungen 80 und der Zapfen 84 in Fig. 4 von den dargestellten Ausführungsbeispielen abweichen kann. Die Kombination der Ausnehmung 80 mit dem Zapfen 84 kann sowohl in Form eines Druckknopfes als auch in langgestreckter Form ausgebildet sein. Alternativ zu der Darstellung in Fig. 6 ist es des weiteren möglich, die Enden 108 des Löffels 106 nach außen auf zubiegen, wodurch ebenfalls eine Zusammenfügung der Stapel 102, 104 verhindert würde.

In Fig. 8 ist eine Reihe von zusammenzufügenden Kunststoffteilen in ihrer Gesamtheit mit dem Bezugszeichen 128 bezeichnet. Die einzelnen Kunststoffteile 130 sind dabei nur schematisch dargestellt und werden in Flußrichtung des Pfeils 132 zusammengefügt.

Jedes der Kunststoffteile 130 weist einen Clip 134 auf, der beim Spritzgießen des Kunststoffteils 130 an dieses angegossen wird. Der Clip 134 ist mit dem Kunststoffteil 130 über ein Filmscharnier 136 verbunden, welches gleichzeitg eine Sollbruchstelle bildet. Das Ende 138 jedes Clips 134 weist eine Öffnung auf, die komplementär zu der Vorderseite 139 jedes Clips 134 ausgebildet ist. In einem Ausführungsbeispiel sind das Ende 138 und die Vorderseite 139 jedes Clips 134 in Form einer Schwalbenschwanz-Passung ausgebildet. An der Unterseite 140 jedes Clips 134 ist jeweils ein Abstandhalter 142 angeformt.

Die Kunststoffteile 130 der Reihe 128 werden bei diesem Ausführungsbeispiel gemäß dem folgenden Schema aneinander befestigt:

Die Kunststoffteile 130 sind auf einem Transportband 144 abgelegt, das sich in Richtung des Pfeils 132 bewegt. Mit dem Bezugszeichen 146 ist ein Anschlag bezeichnet. In dem Moment, in dem ein Kunststoffteil 130 die Position des Anschlags 146 erreicht, wird sein Clip 134 entgegen der Richtung des Pfeils 132 umgebogen. Die Abmessungen der Clips 134, des Anschlags 146 sowie der Kunststoffteile 130 sind dabei derart gewählt, daß die Clips 134 der aufeinanderfolgenden Kunststoffteile 130 beim Umlegen an dem Anschlag 146 automatisch zusammengefügt werden. In dem Fall der Schwalbenschwanz-Passung bedeutet dies, daß der Schwalbenschwanz jedes Clips 134 in die entsprechende Aufnahme des vorhergehenden bzw. nachfolgenden Clips 134 eingeführt wird. Die Abstandhalter 142 an jedem Clip 134 bewirken dabei in Ergänzung zu den Clips 134, daß die Kunststoffteile 130 beim Zusammenfügen in dem vorgesehenen Abstand D gehalten werden. Damit wird erreicht, daß auch Teile mit nicht definiert aneinanderlegbaren Oberflächen gestapelt werden können, wie in Fig. 8 mit 131 angedeutet.

Es müssen dabei nicht notwendigerweise Abstandshalter eingesetzt werden, die einen endlichen Abstand zwischen den Teilen bewirken. Allgemein gesprochen können Elemente verwendet werden, die eine definierte Stapelbildung gestatten, wobei der Abstand zwischen den Teilen auch Null sein kann.

Wenn die vorgesehene Anzahl an Kunststoffteilen 130 in der Reihe 128 erreicht ist, wird der Clip 148 des nächst folgenden Kunststoffteils 150 von diesem abgetrennt. Dies hat zur Folge, daß das Kunststoffteil 150 nicht mit dem vorangehenden Kunststoffteil 130 der Reihe 128 zusammengefügt werden kann. Die Wirkung ist insofern dieselbe, wie anhand der Fig. 4 und 6 für das Beispiel der Einweglöffel beschrieben.

Alternativ zu dem hier dargestellten Ausführungsbeispiel können an jedem Kunststoffteil 130 auch mehrere Clips 134 angegossen sein, die es ermöglichen, das Kunststoffteil 130 an mehreren Seiten mit anderen Kunststoffteilen 130 zusammenzufügen. Durch Abtrennen der entsprechenden Clips 148 ist es dann möglich, ein Zusammenfügen der Kunststoffteile 130 in ausgewählten Richtungen gezielt zu unterbinden.

Fig. 9 zeigt in einer ähnlichen schematischen Darstellung wie Fig. 8 ein Ausführungsbeispiel, bei dem Kunststoffteile 160 in Richtung des Pfeils 162 mit Hilfe von Clips 164 zusammengefügt werden. Die Clips 164 sind wiederum über Filmscharniere 166 mit den Kunststoffteilen 160 verbunden. Die Filmscharniere 166 bilden eine Sollbruchstelle zum Abtrennen der Clips 164.

Wie im vorhergehenden Ausführungsbeispiel, werden die Kunststoffteile 160 auf einem Transportband 167 in Richtung des Pfeils 162 aneinander herangeführt. Die Clips 164 der Kunststoffteile 160 werden dabei an einem Anschlag 168 entgegen der Richtung des Pfeils 162 umgelegt. Das Ende 170 jedes Clips 164 ist in dem hier dargestellten Ausführungsbeispiel U-förmig ausgeführt. Die Abmessungen der Clips 164 und der Kunststoffteile 160 sind derart bemessen, daß das U-förmige Ende 170 jedes Clips 164 beim Zusammenfügen in Nuten 172 an dem nachfolgenden Clip 164 einrastet. Wie im vorhergehenden Ausführungsbeispiel auch, wird die Reihe der Kunststoffteile 160 dadurch abgeschlossen, daß bei dem Kunststoffteil 174 der Clip 176 abgetrennt wird. Dies hat wiederum zur Folge, daß das Kunststoffteil 174 mit der Reihe der Kunststoffteile 160 unverbunden bleibt.

Im Unterschied zu dem Ausführungsbeispiel gemäß Fig. 8 werden die Clips 164 in dem hier dargestellten Fall nicht während, sondern bereits vor dem eigentlichen Zusammenfügen an dem Anschlag 168 umgeklappt.

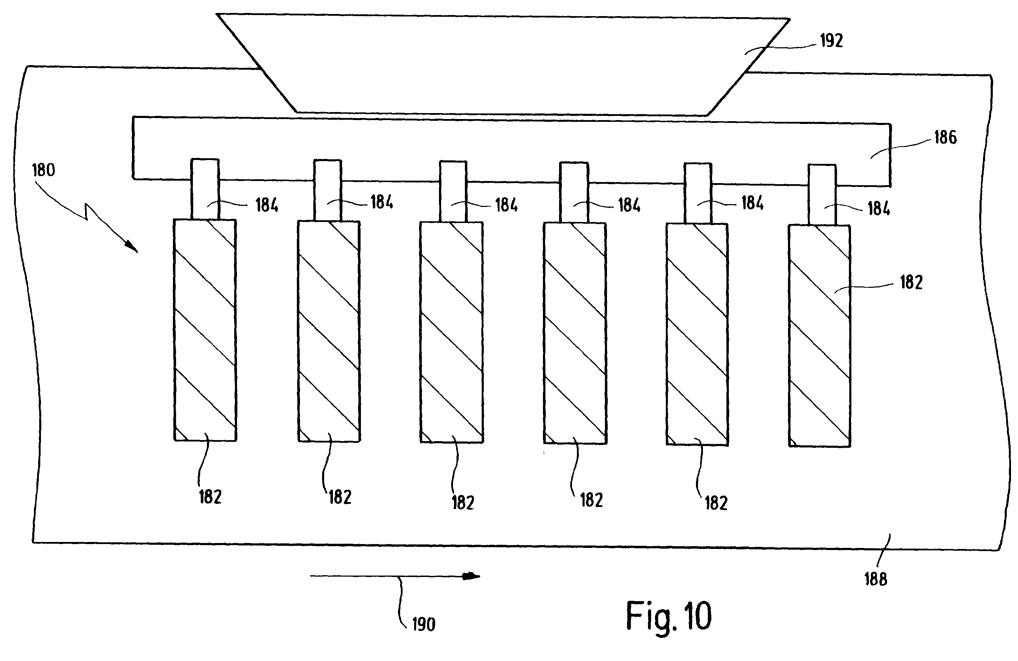

In dem weiteren Ausführungsbeispiel gemäß Fig. 10 besteht eine Transport- bzw. Verpackungseinheit 180 aus Kunststoffteilen 182, die mit Hilfe von Clips 184 an einem neben den Kunststoffteilen 182 verlaufenden Trägerstreifen 186 befestigt sind. Die Kunststoffteile 182 werden hiernach also nicht unmittelbar aneinander befestigt, sondern mittelbar mit Hilfe des Trägerstreifens 186 zusammengefügt. Dabei ist es leicht möglich, die Kunststoffteile zu Flächen oder Streifen zusammenzufügen. Die Transport- bzw. Verpackungseinheit 180 liegt dabei auf einem Transportband 188, das sich in Richtung des Pfeils 190 bewegt. Mit der Bezugsziffer 192 ist schematisch eine Führung angedeutet, die an dem Trägerstreifen 186 angreift und mit der die Transport- bzw. Verpackungseinheit 180 auf dem Transportband 188 ausgerichtet wird. Ebenso kann die Transport- bzw. Verpackungseinheit 180 an diesem Trägerstreifen 186 aufgenommen, gehalten oder anderweitig gehandhabt werden.

Es versteht sich, daß eine derartige Führung der Kunststoffteile bzw. der aus ihnen gebildeten Transport- bzw. Verpackungseinheiten auch bei den zuvor dargestellten Ausführungsbeispielen möglich ist. Insbesondere kann die Führung dabei auch an den zusätzlichen Verbindungsmitteln der einzelnen Kunststoffteile angreifen.

## Patentansprüche

1. Verfahren zum Herstellen von Kunststoffteilen (12; 16, 24; 48; 12, 74, 76; 12, 106; 130, 150; 160, 174; 182) mit den Schritten:
- Formen der Kunststoffteile (12; 16, 24; 48; 12, 74, 76; 12, 106; 130, 150; 160, 174; 182) in einem Formhohlraum (32) eines Formwerkzeugs (34, 36),
- Entformen der Kunststoffteile (12; 16, 24; 48; 12, 74, 76; 12, 106; 130, 150; 160, 174; 182) aus dem Formhohlraum (32) mit Hilfe eines Greifwerkzeugs (44) und
- Zusammenstellen der Kunststoffteile (12; 16, 24; 48; 12, 74, 76; 12, 106; 130, 150; 160, 174; 182) zu von selbst zusammenhaltenden und handhabbaren Transport- bzw. Verpackungseinheiten (10; 14; 10, 70, 72; 100, 102, 104; 128; 180),
dadurch gekennzeichnet,
- daß die Kunststoffteile (12; 16, 24; 48; 12, 74, 76; 12, 106; 130, 150; 160, 174; 182) vorzugsweise an sich nicht stapelbar sind;
- daß die Kunststoffteile (12; 16, 24; 48; 12, 74, 76; 12, 106; 130, 150; 160, 174; 182) durch einen Spritzgießvorgang geformt werden,
- daß beim Spritzgießen an den Kunststoffteilen (12; 16, 24; 48; 12, 74, 76; 12, 106; 130, 150; 160, 174; 182) zusätzliche, für die Kunststoffteile (12; 16, 24; 48; 12, 74, 76; 12, 106; 130, 150; 160, 174; 182) nicht bestimmungsgemäß notwendige Verbindungsmittel (18; 56; 80, 84; 112, 116; 134, 148; 164, 176; 184) vorgesehen werden, und
- daß die Kunststoffteile (12; 16, 24; 48; 12, 74, 76; 12, 106; 130, 150; 160, 174; 182) mit Hilfe der zusätzlichen Verbindungsmittel (18; 56; 80, 84; 112, 116; 134, 148; 164, 176; 184) zu den Transport- bzw. Verpackungseinheiten (10; 14; 10, 70, 72; 100, 102, 104; 128; 180) zusammengefügt werden.

2. Verfahren nach Anspruch 1, dadurch gekennzeichnet, daß die Kunststoffteile (12; 16, 24; 48; 12, 74, 76; 12, 106; 130, 150; 160, 174) zu Blöcken gestapelt werden.

3. Verfahren nach Anspruch 1, dadurch gekennzeichnet, daß die Kunststoffteile (182) seitlich derart zusammengefügt werden, daß sie Flächen oder Streifen von Kunststoffteilen (182) bilden.

4. Verfahren nach einem oder mehreren der Ansprüche 1 bis 3, dadurch gekennzeichnet, daß die Kunststoffteile (48) mittels des Greifwerkzeugs (44) zusammengefügt werden.

5. Verfahren nach einem oder mehreren der Ansprüche 1 bis 4, dadurch gekennzeichnet, daß die Kunststoffteile (12; 16, 24; 48; 12, 74, 76; 12, 106; 130, 150; 160, 174; 182) derart zusammengefügt werden, daß sie nach dem Zusammenfügen nur durch Aufbringen einer vorbestimmten Trennkraft voneinander lösbar sind.

6. Verfahren nach einem oder mehreren der Ansprüche 1 bis 5, dadurch gekennzeichnet, daß die Kunststoffteile (12; 16, 24; 48; 12, 74, 76; 12, 106; 130, 150; 160, 174) unmittelbar aneinander befestigt werden.

7. Verfahren nach einem oder mehreren der Ansprüche 1 bis 5, dadurch gekennzeichnet, daß die Kunststoffteile (182) an einem gemeinsamen Verbindungsmittel (186) befestigt werden.

8. Verfahren nach einem oder mehreren der Ansprüche 1 bis 7, dadurch gekennzeichnet, daß die Kunststoffteile (12; 16, 24; 48; 12, 74, 76; 12, 106; 130, 150; 160, 174; 182) zerstörungsfrei lösbar zusammengefügt werden.

9. Verfahren nach einem oder mehreren der Ansprüche 1 bis 7, dadurch gekennzeichnet, daß die Kunststoffteile durch Materialzerstörung, insbesondere durch Schneiden, Reißen oder Brechen, lösbar zusammengefügt werden.

10. Verfahren nach einem oder mehreren der Ansprüche 1 bis 9, dadurch gekennzeichnet, daß die Kunststoffteile mittels verlorener Verbindungsmittel miteinander verbunden werden, die ihrerseits von den Kunststoffteilen lösbar sind.

11. Verfahren nach einem oder mehreren der Ansprüche 1 bis 10, dadurch gekennzeichnet, daß als zusätzliche Verbindungsmittel (134, 148; 164, 176) Clips an einer Außenkontur der Kunststoffteile (130, 150; 160, 174) angegossen werden und daß die Kunststoffteile (130, 150; 160, 174) mit Hilfe der Clips zusammengefügt werden.

12. Verfahren nach einem der Ansprüche 1 bis 11, dadurch gekennzeichnet, daß die Kunststoffteile (12; 16, 24; 48; 12, 74, 76; 12, 106) mit einer Preßpassung aneinander befestigt werden.

13. Verfahren nach einem der Ansprüche 1 bis 12, dadurch gekennzeichnet, daß bei jeweils einem ausgewählten Kunststoffteil (74; 106; 150; 174) einer Reihe von Kunststoffteilen die zusätzlichen Verbindungsmittel (86; 108; 148; 176) zumindest einseitig funktionslos gemacht werden, so daß das ausgewählte Kunststoffteil (74; 106; 150; 174) beim Zusammenfügen mit einem vorhergehenden bzw. nachfolgenden Kunststoffteil der Reihe unverbunden bleibt.

14. Verfahren nach Anspruch 13, dadurch gekennzeichnet, daß die zusätzlichen Verbindungsmittel (148; 176) nach dem Spritzgießen von dem ausgewählten Kunststoffteil (150; 174) abgetrennt werden.

15. Verfahren nach Anspruch 13, dadurch gekennzeichnet, daß die zusätzlichen Verbindungsmittel (86; 108) nach dem Spritzgießen des ausgewählten Kunststoffteils (74; 106) mit einem Stempel (60) verformt werden.

16. Verfahren, insbesondere nach einem oder mehreren der Ansprüche 1 bis 15, dadurch gekennzeichnet, daß die zusätzlichen Verbindungsmittel (184, 186) zum Führen der Kunststoffteile (182) verwendet werden.

17. Verfahren nach einem oder mehreren der Ansprüche 1 bis 16, dadurch gekennzeichnet, daß die Kunststoffteile (130, 150; 160, 174) mittels eine Paketbildung ermöglichenden Haltern zusammengefügt werden.

18. Verfahren nach Anspruch 17, dadurch gekennzeichnet, daß die Kunststoffteile (130, 150) mittels Abstandshaltern (142) im Abstand voneinander zusammengefügt werden.

19. Vorrichtung zum Herstellen von Kunststoffteilen (12; 16, 24; 48; 12, 74, 76; 12, 106; 130, 150; 160, 174; 182), mit einem Formwerkzeug (34, 36) mit zumindest einem Formhohlraum (32) zum Formen von Kunststoffteilen (12; 16, 24; 48; 12, 74, 76; 12, 106; 130, 150; 160, 174; 182), mit einem Greifwerkzeug (44) zum Entformen der Kunststoffteile (12; 16, 24; 48; 12, 74, 76; 12, 106; 130, 150; 160, 174; 182) aus dem Formhohlraum (32) und mit Mitteln zum Zusammenstellen der Kunststoffteile (12; 16, 24; 48; 12, 74, 76; 12, 106; 130, 150; 160, 174; 182) zu Transport- bzw. Verpackungseinheiten (10; 14; 10, 70, 72; 100, 102, 104; 128; 180), dadurch gekennzeichnet, daß das Formwerkzeug (34, 36) ein Spritzgießwerkzeug für an sich nicht stapelbare Teile ist, daß der Formhohlraum (32) Elemente (52, 54) zum Ausbilden von zusätzlichen, für die Kunststoffteile (12; 16, 24; 48; 12, 74, 76; 12, 106; 130, 150; 160, 174; 182) nicht bestimmungsgemäß notwendigen Verbindungsmitteln (18; 56; 80, 84; 112, 116; 134, 148; 164, 176; 184) an den Kunststoffteilen (12; 16, 24; 48; 12, 74, 76; 12, 106; 130, 150; 160, 174; 182) aufweist und daß Mittel vorgesehen sind, um die Kunststoffteile (12; 16, 24; 48; 12, 74, 76; 12, 106; 130, 150; 160, 174; 182) mit Hilfe der zusätzlichen Verbindungsmittel (18; 56; 80, 84; 112, 116; 134, 148; 164, 176; 184) zu den Transport- bzw. Verpackungseinheiten (10; 14; 10, 70, 72; 100, 102, 104; 128; 180) zusammenzufügen.

20. Vorrichtung nach Anspruch 19, dadurch gekennzeichnet, daß sie weiterhin Mittel (60) aufweist, um die zusätzlichen Verbindungsmittel (18; 56; 80, 84; 112, 116; 134, 148; 164, 176) ausgewählter Kunststoffteile (74; 106; 150; 174) funktionslos zu machen, insbesondere zu verformen oder abzutrennen.

21. Durch Spritzgießen hergestelltes, an sich nicht stapelbares Kunststoffteil (12; 16, 24; 48; 12, 74, 76; 12, 106; 130, 150; 160, 174; 182), dadurch gekennzeichnet, daß es zusätzliche, für das Kunststoffteil (12; 16, 24; 48; 12, 74, 76; 12, 106; 130, 150; 160, 174; 182) nicht bestimmungsgemäß notwendige Verbindungsmittel (18; 56; 80, 84; 112, 116; 134, 148; 164, 176; 184) aufweist, wobei die zusätzlichen Verbindungsmittel (18; 56; 80, 84; 112, 116; 134, 148; 164, 176; 184) derart ausgebildet sind, daß die Kunststoffteile (12; 16, 24; 48; 12, 74, 76; 12, 106; 130, 150; 160, 174; 182) mittels der Verbindungsmittel (18; 56; 80, 84; 112, 116; 134, 148; 164, 176; 184) zu von selbst zusammenhaltenden und handhabbaren Transport- bzw. Verpackungseinheiten (10; 14; 10, 70, 72; 100, 102, 104; 128; 180) zusammenfügbar sind.

22. Kunststoffteil nach Anspruch 21, dadurch gekennzeichnet, daß die zusätzlichen Verbindungsmittel (18; 56; 80, 84; 112, 116; 134, 148; 164, 176; 184) lösbar ausgebildet sind.

23. Kunststoffteil nach Anspruch 22, dadurch gekennzeichnet, daß die zusätzlichen Verbindungsmittel zerstörungsfrei lösbar ausgebildet sind.

24. Kunststoffteil nach einem der Ansprüche 21 bis 23, dadurch gekennzeichnet, daß die zusätzlichen Verbindungsmittel (134, 148; 164, 176; 184) Clips beinhalten, die an zumindest einer Seite über eine Außenkontur des Kunststoffteils (130, 150; 160, 174; 182) hinausragen.

25. Kunststoffteil nach einem der Ansprüche 21 bis 24, dadurch gekennzeichnet, daß die zusätzlichen Verbindungsmittel (80, 84; 112, 116) zumindest zwei zueinander komplementäre Formabschnitte beinhalten, die an einander gegenüberliegenden Seiten (78, 82; 110, 114) des Kunststoffteils (12, 74, 76; 12, 106) ausgebildet sind.

26. Kunststoffteil nach Anspruch 25, dadurch gekennzeichnet, daß die komplementären Formabschnitte (112, 116) in die Formgebung des Kunststoffteils (12, 106) integriert sind.
